# EUROPÄISCHE PATENTSCHRIFT

(11) **EP 0 910 851 B1**
(45) Veröffentlichungstag und Bekanntmachung des Hinweises auf die Patenterteilung: **19.09.2001**
(21) Anmeldenummer: 97931714.6
(22) Anmeldetag: 05.07.1997
(51) Int. Cl.: G11B 17/22, G11B 15/68

(54) **PLATTEN-WECHSLER-EINHEIT MIT MODULAREM AUFBAU**
DISK-CHANGING UNIT WITH MODULAR DESIGN
UNITE DE CHANGEMENT DE DISQUES DE CONSTRUCTION MODULAIRE

(30) Priorität: 11.07.1996 DE 19627929; 28.10.1996 DE 19644690
(43) Veröffentlichungstag der Anmeldung: 28.04.1999
(73) Patentinhaber: NSM Storage GmbH, 55411 Bingen (DE)
(72) Erfinder: PITZ, Ulrich, D-55437 Ockenheim (DE); GÖRNER, Martin, D-55425 Waldalgesheim (DE); SCHELLONG, Horst, D-55129 Mainz (DE); Theil, Wolfgang, 55144 Waldlaubersheim (DE); Heidersberger, Börge, 55411 Bingen (DE)
(74) Vertreter: Becker, Bernd, Dipl.-Ing.
(86) Internationale Anmeldenummer: DE9701437
(87) Internationale Veröffentlichungsnummer: WO9802879

(56) Entgegenhaltungen:
- EP-A- 0 749 122
- WO-A-96/18997
- DE-A- 4 330 311
- DE-A- 4 405 361
- US-A- 5 206 845

## Beschreibung

Die Erfindung bezieht sich auf eine Platten-Wechsler-Einheit, insbesondere für CD-Platten, mit einem Towergehäuse mindestens einem auswechselbaren Plattenmagazin, mindestens einem Laufwerk, gegebenenfalls einem Platten-Lade/Ausgabe-Schubfach, die jeweils die gleichen Außenabmessungen aufweisen und modulartig gegeneinander durch Einschieben in bzw. Herausziehen aus entsprechenden Aufnahmeschächten austauschbar und/oder ersetzbar und/oder hinzufügbar sind, einer Transporteinrichtung zur Beförderung einer Platte zwischen dem Plattenmagazin, dem Laufwerk und gegebenenfalls dem Platten-Lade-/Ausgabe-Schubfach, einer Bedieneinrichtung und einer rechnergesteuerten Steuereinheit.

Solche Platten-Wechsler-Einheiten, die in der Regel mehrere Plattenmagazine und/oder Laufwerke aufweisen, werden insbesondere auf dem Gebiet der Datenverarbeitungs- bzw. Computeranlagen verwendet. Für Computergeräte werden häufig Towergehäuse benutzt, in denen unter anderem Diskettenlaufwerke, Schnittstellenkarten, Leiterplatten-Einschübe, Festplatten und ein CD-Laufwerk zum Auslesen und/oder Einschreiben von Informationen von einer bzw. auf eine CD-Platte untergebracht sind.

Aus der EP 0 439 483 B1 ist ein CD-Plattenabspielgerät mit zwei einander gegenüberliegenden, auswechselbaren Plattenmagazinen bekannt, die mit in horizontalen Aufnahmefächern gelagerten, jeweils eine CD-Platte aufnehmenden Plattenhaltern bestückt sind. Eine in Stapelrichtung der Plattenmagazine verfahrbare Transporteinrichtung befördert eine gewünschte CD-Platte mit dem zugehörigen Plattenhalter zwischen dem Aufnahmefach des jeweiligen Plattenmagazins und einer Abspieleinheit hin und her.

Weiterhin zeigt die DE 39 31 715 A1 ein Plattenabspielgerät mit einem auswechselbaren Plattenmagazin, welches in übereinanderliegenden Aufnahmefächern gelagerte CD-Platten enthält. Das schubfachartig in das Gehäuse des Plattenabspielgerätes eingesetzte Plattenmagazin ist über eine Verriegelungseinrichtung im Gehäuse in seiner Position festgelegt.

Des weiteren ist aus der DE 195 19 343 A1 eine CD-Platten-Wechsler-Einheit der eingangs genannten Art bekannt, bei der mehrere Laufwerke gehäusefest und nicht austauschbar, sowie mehrere übereinander und nebeneinander einsetzbare Plattenmagazine in einem Towergehäuse untergebracht sind. Zwischen den Plattenmagazinen bzw. den Laufwerken ist eine auf- und abverfahrbare Transporteinrichtung angeordnet. Darüber hinaus ist an der Frontseite des Towergehäuses ein Platten-Lade-/Ausgabe-Schubfach vorgesehen.

Nachteilig bei allen diesen vorgenannten Platten-Wechsler-Einheiten bzw. Plattenabspielgeräten ist die starre Anordnung der Laufwerke und des Platten-Lade-/Ausgabe-Schubfaches innerhalb des Towergehäuses. Lediglich die Plattenmagazine sind austauschbar darin angeordnet, wobei immer nur ein Plattenmagazin durch ein anderes ersetzt werden kann. Derartige Platten-Wechsler-Einheiten bzw. -abspielgeräte sind daher nur in einem beschränkten Umfang einsetzbar oder umständlich zu handhaben. Für viele Zwecke kann es jedoch erforderlich sein, daß die Platten-Wechsler-Einheit über weniger Plattenmagazine und dafür mehr Laufwerke oder über weniger Laufwerke und mehr Plattenmagazine verfügen soll. Dies ist häufig davon abhängig, in welchem Umfang Daten archiviert oder aus einem Datenarchiv Informationen bezogen werden sollen.

Die US-PS 5,206,845 offenbart einen Plattenwechsler mit einem Towergehäuse, mindestens einem auswechselbaren Plattenmagazin, mindestens einem Laufwerk und gegebenenfalls einem Platten-Lade/Ausgabe-Schubfach, die jeweils die gleichen Außenabmessungen aufweisen und modulartig gegeneinander durch Einschieben in bzw. Herausziehen aus entsprechenden Aufnahmeschächten ausgetauscht oder hinzugefügt werden können.

Die Aufgabe der Erfindung besteht darin, eine CD-Platten-Wechsler-Einheit der eingangs genannten Art zu schaffen, die mit Plattenmagazinen und gegebenenfalls einem Platten-Lade-/Ausgabe-Schubfach in jedem Betriebsmodus individuell bestückt werden kann.

Erfindungsgemäß wird die Aufgabe dadurch gelöst, daß das Laufwerk und gegebenenfalls das Platten-Lade-/Ausgabe-Schubfach während des Betriebes der Platten-Wechsler-Einheit austauschbar und/oder ersetzbar und/oder hinzufügbar ist, wobei die Steuereinheit mit einem Steuerprogramm zur Anzeige der momentanen Benutzung einer Platte und zur Steuerung der Freigabe eines entsprechenden Plattenmagazins zu dessen Entnahme aus dem Towergehäuse versehen ist.

Die gleichen Außenabmessungen der auf die CD-Platten zugreifenden elektronischen Baueinheiten ermöglichen es, diese individuell je nach den Wünschen des Benutzers gegeneinander auszutauschen, zu ersetzen oder hinzuzufügen. So kann beispielsweise ein Plattenmagazin gegen ein anderes Plattenmagazin während des Betriebes der CD-Platten-Wechsler-Einheit auf einfache Weise ausgetauscht werden. Darüber hinaus kann ein Plattenmagazin durch ein Laufwerk oder umgekehrt ein Laufwerk durch ein Plattenmagazin modulartig ersetzt werden. Ebenfalls ist es möglich, in die Aufnahmeschächte Attrappen der auf die Platten angreifenden Baueinheiten einzusetzen, um optisch stets eine voll bestückte Platten-Wechsler-Einheit vorliegen zu haben. Des weiteren ist es möglich, bereits im Towergehäuse befindlichen Plattenmagazinen und/oder Laufwerken weitere Plattenmagazine, Laufwerke oder ein Platten-Lade-/Ausgabe-Schubfach hinzuzufügen. Durch diese modulartige Austauschbarkeit der elektronischen Baueinheiten ist die Platten-Wechsler-Einheit den jeweiligen Bedürfnissen des Benutzers optimal anzupassen. So können z.B. eine Vielzahl von Plattenmagazinen und nur eine geringe Anzahl von Laufwerken vorgesehen werden, wenn der Anwendungszweck der Platten-Wechsler-Einheit vorrangig auf die Datenarchivierung gerichtet ist und dadurch die Speicherkapazität groß gehalten werden muß. Sollen hingegen hauptsächlich Informationen aus einem Datenarchiv ausgelesen und/oder Platten beschrieben werden, kann die Platten-Wechsler-Einheit mit einer größeren Anzahl von Laufwerken zum Lesen und/oder Schreiben von Informationen aus oder auf die CD-Platte bei einer geringeren Anzahl von Plattenmagazinen versehen werden. Die Platten-Wechsler-Einheit ist somit vollständig modular bestückbar und kann vom Benutzer weitgehendst selbst konfiguriert werden. Die Platten-Wechsler-Einheit ist mit einem Einzelplatz-Computer oder einem Server einer Netzwerkanlage leicht zu kombinieren. Dabei kann die Platten-Wechsler-Einheit unmittelbar neben dem Computer bzw. Server aufgestellt werden, so daß es einfach und bequem ist, die entsprechenden elektronischen Baueinheiten auszutauschen, zu ersetzen oder hinzuzufügen. Dadurch ist die Platten-Wechsler-Einheit leicht zu handhaben.

Nach einer vorteilhaften Ausgestaltung der Erfindung ist die momentane Benutzung oder Nichtbenutzung einer Platte bzw. die Freigabe oder Nichtfreigabe eines Plattenmagazins mittels eines diesem jeweils zugeordneten Leuchtelementes angezeigbar. Bevorzugt ist jedem Plattenmagazin weiterhin ein Bedienelement zur Abfrage der jeweiligen Freigabe zugeordnet. Durch Betätigen des Bedienelementes wird das zugehörige Plattenmagazin zur Entnahme freigegeben. Während des Betriebes der Platten-Wechsler-Einheit kann durch Betätigen einer Drucktaste abgefragt werden, ob der Inhalt eines Plattenmagazins momentan in Benutzung ist. Nach Betätigen der Drucktaste prüft das Steuerprogramm in der Steuereinheit, ob eine Platte dem zugehörigen Plattenmagazin entnommen ist oder nicht. Sind sämtliche Platten im Piattenmagazin aufgenommen, wird das zugehörige Leuchtelement aktiviert und dem Benutzer angezeigt, daß dieses Plattenmagazin freigegeben ist. Durch ein kurzes, manuelles Eindrücken des Plattenmagazins wird eine federbelastete Verriegelung des Plattenmagazins freigegeben, wodurch dieses in einem bestimmten Maß aus dem Ausgabeschacht des Towergehäuses hervorspringt. Nun kann dieses Plattenmagazin gegen ein anderes Plattenmagazin in den entsprechenden Aufnahmeschacht eingeschoben werden, bis die Verriegelung das Plattenmagazin festlegt. Befindet sich eine dem Plattenmagazin zugehörige Platte außerhalb des Plattenmagazins, so wird diese Platte angefordert /z.B. aus einem Laufwerk) und in dem Plattenmagazin abgelegt, worauf dann das Plattenmagazin zur Entriegelung und damit zur Entnahme freigegeben wird. Selbstverständlich ist das vorgenannte Steuerprogramm in analoger Weise für die Laufwerke und/oder das Platten-Lade-/Ausgabe-Schubfach anwendbar. Da das Plattenmagazin während des Betriebes der Platten-Wechsler-Einheit austauschbar und/oder ersetzbar und/oder hinzufügbar sein soll, wird dieses durch das Einschieben automatisch mit entsprechenden Anschlußkontakten verbunden, die an die Steuereinheit angeschlossen sind.

Zweckmäßigerweise sind das Plattenmagazin, das Laufwerk und/oder das Platten-Lade-/Ausgabe-Schubfach im vorderen Teil des Towergehäuses modulartig angeordnet und von der Frontselte des Towergehäuses auszutauschbar und/oder ersetzbar und/oder hinzuzufügbar. Ferner sind bevorzugt weitere Plattenmagazine und/oder Laufwerke im hinteren Teil des Towergehäuses modulartig angeordnet und von der Rückseite des Towergehäuses ausgetauschbar und/oder ersetzbar und/oder hinzugefügbar. Dadurch wird die Variabilität der Platten-Wechsler-Einheit noch erheblich vergrößert, da eine Bestückung sowohl im vorderen als auch im hinteren Teil des Towergehäuses in individueller Weise leicht vorgenommen werden kann.

Nach einer Weiterbildung der Erfindung ist die Transporteinrichtung zwischen den im vorderen und den im hinteren Teil des Towergehäuses untergebrachten Plattenmagazinen, Laufwerken bzw. Platten-Lade-/Ausgabe-Schubfach angeordnet. Mit der Transporteinrichtung kann sonach eine Platte aus den Aufnahmefächern der Plattenmagazine zwischen diesen und den Laufwerken bzw. dem Platten-Lade-/Ausgabe-Schubfach in beliebiger Weise hin- und herbefördert werden.

Bei einer weiteren Ausgestaltung der Erfindung weist die Rückseite des Towergehäuses weist eine aufklappbare Tür auf. Um die Sicherheit des Benutzers gegenüber den stromführenden Teilen der CD-Platten-Wechsler-Einheit zu gewährleisten, ist es zweckmäßig, wenn deren Betriebsablauf beim Öffnen der Tür an der Rückseite des Towergehäuses unterbrochen wird. Das ermöglicht einen gefahrlosen Eingriff des Benutzers ins Innere des Towergehäuses.

Zweckmäßigerweise sind die im vorderen und hinteren Teil des Towergehäuses übereinander angeordneten Aufnahmeschächte jeweils seitlich von einem gehäusefesten Führungsrahmen umgeben. Diese Aufnahmeschächte dienen der Führung der auf die Platte zugreifenden elektronischen Baueinheiten in das und aus dem Towergehäuse und umfassen gleichzeitig die mit der Steuereinheit verbundenen Anschlußkontakte, die mit den entsprechenden Gegenanschlußkontakten der einzuschiebenden Baueinheit verbindbar sind. Es versteht sich, daß die Module der Aufnahmeschächte identische Innenabmessungen aufweisen, die denen der einzusetzenden Baueinheiten entsprechen. Die auf die Platte zugreifenden elektronischen Baueinheiten werden ohne umständliche Verschraubungen in das Towergehäuse eingesetzt.

Bevorzugt sind im unteren Bereich des Towergehäuses die Steuereinheit und eine Stromversorgungseinheit angeordnet. Somit befinden sich diese Einheiten außerhalb des Handhabungsbereiches für die Plattenmagazine, Laufwerke und das Platten-Lade-/Ausgabe-Schubfach. Ein weiterer Vorteil besteht darin, daß die erforderlichen stromführenden Kabel auf eine minimale Länge reduziert werden und sich gleichfalls außerhalb des Handhabungsbereiches der elektronischen Baueinheiten befinden. Störungen oder Schäden durch die stromführenden Kabel sind daher weitgehend ausgeschlossen.

Nach einer weiteren vorteilhaften Ausgestaltung der Erfindung sind im oberen Bereich des Towergehäuses zusätzliche Steckplätze für weitere Betriebsabläufe steuernde Steckkarten vorgesehen. Daher können beispielsweise zusätzliche Controller-Steckkarten oder Netzwerk-Karten usw. eingesetzt werden, die zusätzliche Betriebsabläufe für die Platten-Wechsler-Einheit zur Verfügung stellen. Damit wird diese noch vielseitiger einsetzbar.

Zweckmäßig ist die Bedieneinrichtung an der Frontseite des Towergehäuses angeordnet. Diese Bedieneinrichtung ist somit leicht zugänglich und besonders gut einsehbar.

In weiterer Ausgestaltung des Erfindungsgedankens können zumindest die Plattenmagazine jeweils eine elektronische Kennung aufweisen, die von der Steuereinheit auslesbar ist. Die von der Steuereinheit ausgelesene Kennung wird von der Software des zugehörigen Computers oder Servers erkannt. Wenn ein Plattenmagazin aus der Platten-Wechsler-Einheit entfernt wurde, kann der Benutzer über den Bildschirm seines Computers diesen nach einer bestimmten CD-Platte abfragen, so daß ihm der Computer die Information liefert, ob sich die bestimmte CD-Platte in einem der im Towergehäuse eingesetzten Plattenmagazine befindet oder nicht, und wenn nicht, in welchem Plattenmagazin er die Platte findet. Die Kennung kann ebenfalls benutzt werden, um Benutzerrechte für die Plattenmagazine zu vergeben.

Darüber hinaus kann zumindest einer der Aufnahmeschächte im vorderen oder hinteren Teil des Towergehäuses zur Aufnahme einer Druckereinrichtung oder einer Scannereinrichtung vorgesehen werden. Die Druckereinrichtung kann die CD-Platten beschriften bzw. mit einer Kennung versehen. Die Scannereinrichtung kann die Beschriftungen oder Kennungen definieren und die erkannten Informationen zu einem beliebigen Peripheriegerät der Computeranlage zu beliebigen Informationsverarbeitungszwecken weiterleiten.

Die Erfindung wird im folgenden an einem Ausführungsbeispiel, das in der Zeichnung dargestellt ist, näher erläutert. Es zeigt:

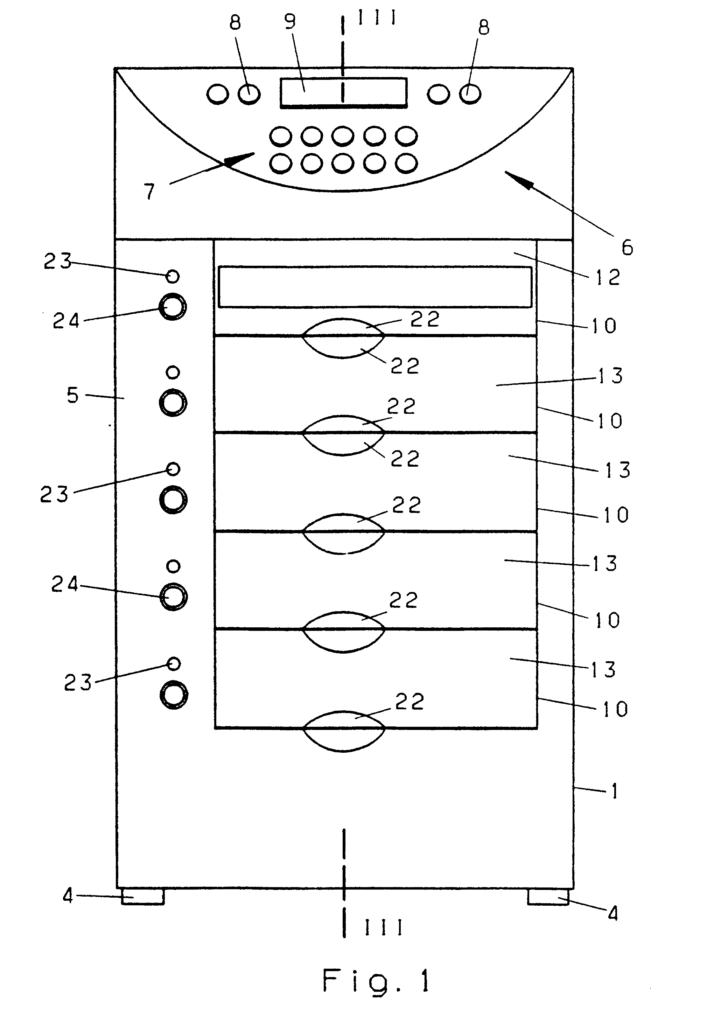

- Fig. 1: eine Vorderansicht einer erfindungsgemäßen CD-Platten-Wechsler-Einheit,

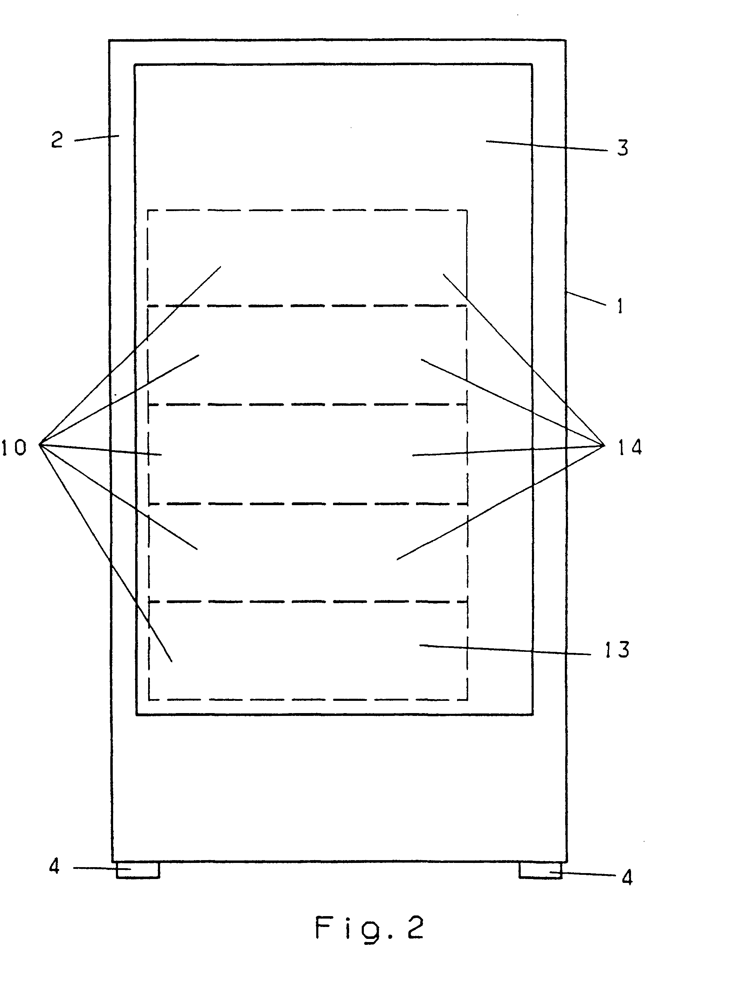

- Fig. 2: eine Rückansicht der CD-Platten-Wechsler-Einheit nach Fig. 1 im verkleinerten Maßstab und

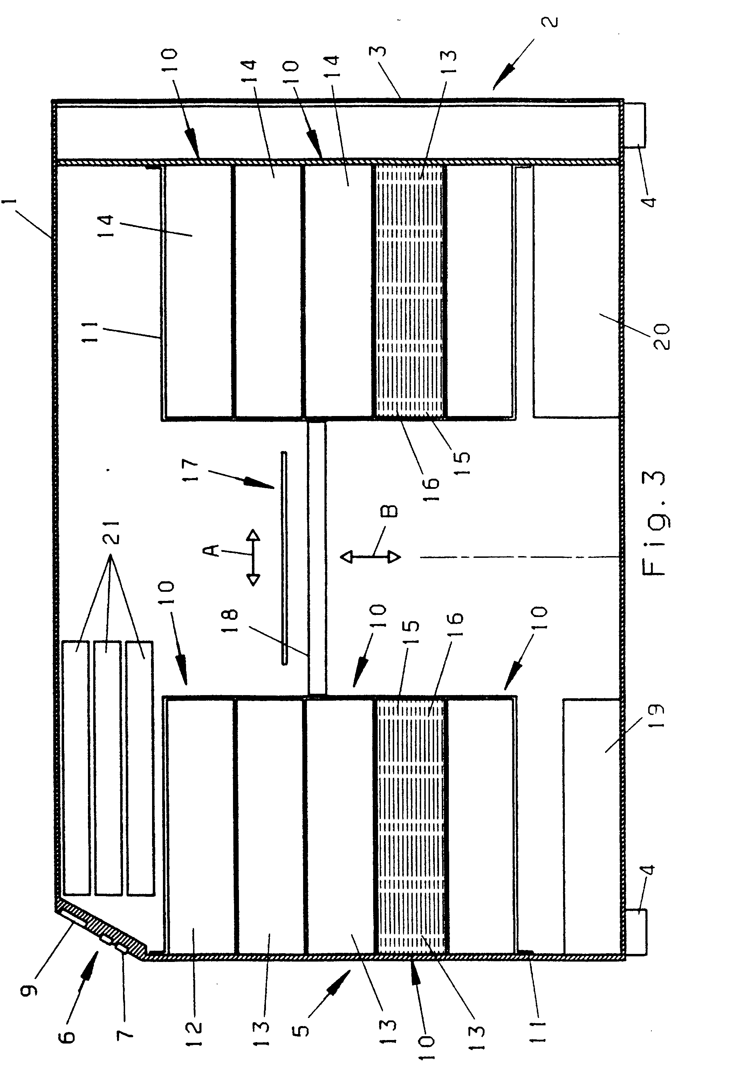

- Fig. 3: eine geschnittene Seitenansicht der CD-Platten-Wechsler-Einheit entlang der Linie III-III gemäß Fig. 1 im verkleinerten Maßstab.

Die CD-Platten-Wechsler-Einheit umfaßt ein Towergehäuse 1 mit einer an der Rückseite 2 angelenkten aufklappbaren Tür 3, durch die das Innere des Towergehäuses 1 zugänglich ist, um das Auswechseln von elektronischen Baueinheiten zu erleichtern und darüber hinaus Reparatur- und Wartungsarbeiten zu ermöglichen. Das Towergehäuse 1 ruht an seinen unteren vier Eckpunkten auf Füßen 4, die gegebenenfalls höhenverstellbar ausgebildet sind, um Bodenunebenheiten ausgleichen zu können.

An der Frontseite 5 des Towergehäuses 1 ist eine Bedieneinrichtung 6 vorgesehen. Diese Bedieneinrichtung 6 enthält als wesentlichen Bestandteil ein Programmtastenfeld 7, welches zur Programmierung des Bedienablaufes der CD-Platten-Wechsler-Einheit dient. Weiterhin enthält die Bedieneinrichtung 6 Funktionsanzeigen und Funktionstasten 8 zum Anzeigen der jeweiligen Betriebszustände und zu deren Aktivierung. Weiterhin ist in der Bedieneinrichtung 6 ein Anzeigedisplay 9 vorgesehen, welches den jeweiligen Programmablauf der CD-Platten-Wechsler-Einheit optisch darstellt.

Auf der Frontseite 5 des Towergehäuses 1 befindet sich eine Mehrzahl von übereinander angeordneten modulartigen Aufnahmeschächten 10, die alle die gleichen inneren Abmessungen aufweisen. Entsprechende modulartige Aufnahmeschächte 10 sind ebenfalls im hinteren Teils des Towergehäuses 1 angeordnet. Die Aufnahmeschächte 10 werden jeweils von einem Führungsrahmen 11 umschlossen, der seitlich gehäusefest mit dem Towergehäuse 1 verbunden ist.

In die modulartigen Aufnahmeschächte 10 im vorderen und hinteren Teil des Towergehäuses 1 sind eine Reihe von elektronischen Baueinheiten aufgenommen, die in ihren äußeren Abmessungen mit den inneren Abmessungen der Aufnahmeschächte 10 korrespondieren. Im obersten Aufnahmeschacht 10 an der Frontseite 5 des Towergehäuses 1 ist ein Platten-Lade-/Ausgabe-Schubfach 12 eingesetzt. Die darunter befindlichen vier Aufnahmeschächte 10 sind jeweils mit einem Plattenmagazin 13 bestückt. Der unterste Aufnahmeschacht 10 im hinteren Teil des Towergehäuses 1 ist ebenfalls mit einem Plattenmagazin 13 besetzt. In die darüber befindlichen vier Aufnahmeschächte 10 ist jeweils ein Laufwerk 14 eingesteckt. Diese Laufwerke 14 dienen zum Auslesen und/oder Einschreiben von Informationen von einer bzw. auf eine CD-Platte. Sie können daher als Leselaufwerk und/oder Schreiblaufwerk ausgebildet sein. Die Plattenmagazine 13 weisen jeweils eine Vielzahl übereinanderliegender Aufnahmefächer 15 für die Lagerung einer entsprechenden Anzahl je eine CD-Platte aufnehmender Plattenhalter 16 auf. Zwischen den Aufnahmeschächten 10 im vorderen Teil und den Aufnahmeschächten 10 im hinteren Teil des Towergehäuses 1 ist eine gemäß Doppelpfeil B auf- und abverfahrbare Transporteinrichtung 17 für die eine CD-Platte aufnehmenden Plattenhalter 16 angeordnet. Die Transporteinrichtung 17 umfaßt auch einen in Richtung des Doppelpfeiles A hin- und herfahrbaren Schlitten 18, mit dem ein Plattenhalter 16 in die und aus der Transporteinrichtung 17 befördert wird. Die Transporteinrichtung 17 ist somit in der Lage, einen eine CD-Platte enthaltenden Plattenhalter 16 zwischen den Plattenmagazinen 13, den Laufwerken 14 und dem Platten-Lade-/Ausgabe-Schubfach 12 beliebig hin und her zu befördern.

Unterhalb der modulartigen Aufnahmeschächte 10 im vorderen Teil des Towergehäuses 1 ist eine rechnergesteuerte Steuereinheit 19 zur Steuerung des Betriebsablaufes der CD-Platten-Wechsler-Einheit angeordnet. Darüber hinaus befindet sich unterhalb der modulartigen Aufnahmeschächte 10 im hinteren Teil des Towergehäuses 1 eine Stromversorgungseinheit 20 für die CD-Platten-Wechsler-Einheit. Weiterhin ist hinter der Bedieneinrichtung 6 im oberen vorderen Teil des Towergehäuses 1 eine Anzahl von zusätzlichen Steckplätzen 21 vorgesehen, in die eine Netzwerkarte, Controllerkarte usw. eingesetzt werden kann.

Das Platten-Lade-/Ausgabe-Schubfach 12 und die Plattenmagazine 13, die in die Aufnahmeschächte 10 an der Frontseite 5 des Towergehäuses 1 eingesetzt sind, weisen auf ihrer Sichtfläche mindestens eine angedeutete Griffmulde 22 auf, um die Auswechselbarkeit der jeweiligen elektronischen Baueinheit erkennbar zu machen. Weiterhin befindet sich neben jeder dieser elektronischen Baueinheiten auf der Frontseite 5 ein LED-Anzeigeelement 23 und eine dieser zugeordnete Drucktaste 24. Das LED-Anzeigeelement 23 dient der Anzeige, ob das zugehörige Plattenmagazin 13 zur Entnahme aus dem Towergehäuse 1 freigegeben ist. Diese Freigabe wird durch Betätigen der Drucktaste 24 abgefragt. Leuchtet das entsprechende LED-Anzeigeelement 23 auf und signalisiert dadurch die Freigabe, wird durch manuellen Druck auf die Sichtfläche des Plattenmagazins 13 dieses entriegelt und springt leicht aus der Frontseite 5 des Towergehäuses 1 hervor. Dann kann das Plattenmagazin 13 entnommen und gegebenenfalls ausgetauscht werden.

## Patentansprüche

1. Platten-Wechsler-Einheit, insbesondere für CD-Platten, mit
- einem Towergehäuse (1)
- mindestens einem auswechselbaren Plattenmagazin (13), mindestens einem Laufwerk (14), gegebenenfalls einem Platten-Lade/Ausgabe-Schubfach (12), die jeweils die gleichen Außenabmessungen aufweisen und modulartig gegeneinander durch Einschieben in bzw. Herausziehen aus entsprechenden Aufnahmeschächten (10) austauschbar und/oder ersetzbar und/oder hinzufügbar sind,
- einer Transporteinrichtung zur Beförderung einer Platte zwischen den Plattenmagazin (13), dem Laufwerk (14) und gegebenenfalls dem Plarten-Lade-/Ausgabe-Schubfach (12),
- einer Bedieneinrichtung (6) und
- einer rechnergesteuerten Steuereinheit (19),
**dadurch gekennzeichnet, daß** das Laufwerk (14) und gegebenenfalls das Platten-Lade-/Ausgabe-Schubfach (12) während des Betriebes der Platten-Wechsler-Einheit austauschbar und/oder ersetzbar und/oder hinzufügbar ist, wobei die Steuereinheit (19) mit einem Steuerprogramm zur Anzeige der momentanen Benutzung einer Platte und zur Steuerung der Freigabe eines entsprechenden Laufwerks (14) zu dessen Entnahme aus den Towergehäuse (1) versehen ist.

2. Platten-Wechsler-Einheit nach Anspruch 1, **dadurch gekennzeichnet, daß** die momentane Benutzung oder Nichtbenutzung einer Platte bzw. die Freigabe oder Nichtfreigabe eines zugehörigen Plattenmagazins (13) mittels eines diesem jeweils zugeordneten Leuchtelementes (23) anzeigbar ist.

3. Platten-Wechsler-Einheit nach Anspruch 1 oder 12, **dadurch gekennzeichnet, daß** jedem Plattenmagazin (13) ein Bedienelement (24) zur Abfrage der jeweiligen Freigabe zugeordnet ist.

4. Platten-Wechsler-Einheit nach einem der Ansprüche 1 bis 3, **dadurch gekennzeichnet, daß** durch Betätigen des Bedienelementes (24) das zugehörige Plattenmagazin (13) zur Entnahme freigegeben wird.

5. Platten-Wechsler-Einheit nach einem der Ansprüche 1 bis 3, **dadurch gekennzeichnet, daß** die Freigabe des jeweiligen Plattenmagazins (13) durch manuellen Druck auf deren vordere Sichtfläche erfolgt.

6. Platten-Wechsler-Einheit nach einem der Ansprüche 1 bis 5, **dadurch gekennzeichnet, daß** das Plattenmagazin (13), das Laufwerk (14) und/oder das Platten-Lade-/Ausgabe-Schubfach (12) im vorderen Teil des Towergehäuses (1) modulartig angeordnet und von der Frontseite des Towergehäuses (1) austauschbar und/oder ersetzbar und/oder hinzufügbar sind.

7. Platten-Wechsler-Einheit nach einem der Ansprüche 1 bis 6, **dadurch gekennzeichnet, daß** weitere Plattenmagazine (13) und/oder Laufwerke (14) im hinteren Teil des Towergehäuses (1) modulartig angeordnet und von der Rückseite (2) des Towergehäuses (1) austauschbar und/oder ersetzbar und/oder hinzufügbar sind.

8. Platten-Wechsier-Einheit nach einem der Anspruche 1 bis 7, **dadurch gekennzeichnet, daß** die Transporteinrichtung (17) zwischen den im vorderen Teil und den im hinteren Teil des Towergehäuses (1) untergebrachten Plattenmagazinen (13), Laufwerken (14) bzw. Platten-Lade-/Ausgabe-Schubfach (12) angeordnet ist.

9. Platten-Wechsler-Einheit nach einem der Ansprüche 1 bis 8, **dadurch gekennzeichnet, daß** die Rückseite (2) des Towergehäuses (1) eine aufklappbare Tür (3) aufweist.

10. Platten-Wechsler-Einheit nach einem der Ansprüche 1 bis 9, **dadurch gekennzeichnet, daß** die im vorderen und hinteren Teil des Towergehäuses (1) übereinander angeordneten Aufnahmeschächte (10) jeweils seitlich von einem gehäusefesten Führungsrahmen umgeben sind.

11. Platten-Wechsler-Einheit nach einem der Ansprüche 1 bis 10, **dadurch gekennzeichnet, daß** im unteren Bereich des Towergehäuses (1) die Steuereinheit (19) und eine Stromversorgungseinheit (20) angeordnet sind.

12. Platten-Wechsler-Einheit nach einem der Ansprüche 1 bis 11, **dadurch gekennzeichnet, daß** im oberen Bereich des Towergehäuses (1) zusätzliche Steckplätze (21) für weitere Betriebsabläufe steuernde Steckkarten (21) vorgesehen sind.

13. Platten-Wechsler-Einheit nach einem der Ansprüche 1 bis 12, **dadurch gekennzeichnet, daß** die Bedieneinrichtung (6) an der Frontseite (5) des Towergehäuses (1) angeordnet ist.

14. Platten-Wechsler-Einheit nach einem der Ansprüche 1 bis 13, **dadurch gekennzeichnet, daß** deren Betriebsablauf beim Öffnen einer Tür (3) an der Rückseite (2) des Towergehäuses (1) unterbrochen wird.

15. Platten-Wechsler-Einheit nach einem der Ansprüche 1 bis 14, **dadurch gekennzeichnet, daß** zumindest die Plattenmagazine (13) jeweils eine elektronische Kennung aufweisen, die von der Steuereinheit (19) auslesbar ist.

16. Platten-Wechsler-Einheit nach einem der Ansprüche 1 bis 15, **dadurch gekennzeichnet, daß** zumindest einer der Aufnahmeschächte (10) im vorderen oder hinteren Teil des Towergehäuses (1) zur Aufnahme einer Druckereinrichtung oder einer Scannereinrichtung vorgesehen ist.

## Claims

1. Disc changing unit, more especially for CDs, having
- a tower housing (1),
- at least one interchangeable disc magazine (13), at least one disc drive (14), possibly a disc loading/ejecting drawer (12), which components each have the same external dimensions and are interchangeable and/or replaceable and/or addable in a modular manner relative to one another by insertion in, or respectively withdrawal from, corresponding receiver compartments (10),
- a conveyor for conveying a disc between the disc magazine (13), the disc drive (14) and posssibly the disc loading/ejecting drawer (12),
- an operating device (6) and
- a computer-controlled control unit (19),
**characterised in that** the disc drive (14), and possibly the disc loading/ejecting drawer (12), is interchangeable and/or replaceable and/or addable during the operation of the disc changing unit, the control unit (19) being provided with a control program for displaying the instantaneous use of a disc and for controlling the release of a corresponding disc drive (14) to remove said drive from the tower housing (1).

2. Disc changing unit according to claim 1, **characterised in that** the instantaneous use or non-use of a disc or respectively the release or non-release of an associated disc magazine (13) can be displayed by means of an illuminating element (23) respectively associated with said magazine.

3. Disc changing unit according to one of claims 1 or 2, **characterised in that** one operating element (24) is associated with each disc magazine (13) for reading-out the respective release.

4. Disc changing unit according to one of claims 1 to 3, **characterised in that**, by actuating the operating element (24), the associated disc magazine (13) is released for removal purposes.

5. Disc changing unit according to one of claims 1 to 3, **characterised in that** the release of the respective disc magazine (13) is effected by manually pressing on the front visible face of said unit.

6. Disc changing unit according to one of claims 1 to 5, **characterised in that** the disc magazine (13), the disc drive (14) and/or the disc loading/ejecting drawer (12) are disposed in the front portion of the tower housing (1) in a modular manner and are interchangeable and/or replaceable and/or addable from the front side of the tower housing (1).

7. Disc changing unit according to one of claims 1 to 6, **characterised in that** additional disc magazines (13) and/or disc drives (14) are disposed in the rear portion of the tower housing (1) in a modular manner and are interchangeable and/or replaceable and/or addable from the rear side (2) of the tower housing (1).

8. Disc changing unit according to one of claims 1 to 7, **characterised in that** the conveyor (17) is disposed between the disc magazines (13) accommodated in the front portion and those accommodated in the rear portion of the tower housing (1), disc drives (14) or respectively disc loading/ejecting drawer (12).

9. Disc changing unit according to one of claims 1 to 8, **characterised in that** the rear side (2) of the tower housing (1) has an upwardly pivotable door (3).

10. Disc changing unit according to one of claims 1 to 9, **characterised in that** the receiver compartments (10), which are disposed above one another in the front and rear portions of the tower housing (1), are each surrounded laterally by a guide frame which is integral with the housing.

11. Disc changing unit according to one of claims 1 to 10, **characterised in that** the control unit (19) and a power supply unit (20) are disposed in the lower region of the tower housing (1).

12. Disc changing unit according to one of claims 1 to 11, **characterised in that** additional insert locations (21) are provided in the upper region of the tower housing (1) for insert cards (21) which control further operational procedures.

13. Disc changing unit according to one of claims 1 to 12, **characterised in that** the operating device (6) is disposed at the front side (5) of the tower housing (1).

14. Disc changing unit according to one of claims 1 to 13, **characterised in that** the operational procedure of said unit is interrupted when a door (3) at the rear side (2) of the tower housing (1) is opened.

15. Disc changing unit according to one of claims 1 to 14, **characterised in that** at least the disc magazines (13) each have a respective electronic identification code, which can be read by the control unit (19).

16. Disc changing unit according to one of claims 1 to 15, **characterised in that** at least one of the receiver compartments (10) in the front or rear portion of the tower housing (1) is provided for the accommodation of a printer or a scanner.

## Revendications

1. Unité de changement de disques, en particulier pour disques compacts, avec
- un boîtier tour (1)
- au moins un magasin de disques échangeable (13), au moins un mécanisme d'entraînement (14), le cas échéant un tiroir de chargement/éjection de disque (12), lesquels présentent tous les mêmes dimensions extérieures et peuvent être mutuellement échangés et/ou remplacés et/ou ajoutés de manière modulaire en étant respectivement insérés dans et extraits des logements correspondants (10),
- un dispositif de transport pour acheminer un disque entre le magasin de disques (13), le mécanisme d'entraînement (14) et, le cas échéant, le tiroir de chargement/éjection de disque (12),
- un dispositif de pilotage (6) et
- une unité de commande (19) commandée par ordinateur,
**caractérisée en ce que** le mécanisme d'entraînement (14) et, le cas échéant, le tiroir de chargement/éjection de disque (12) peuvent être échangés et/ou remplacés et/ou ajoutés durant le fonctionnement de l'unité de changement de disques, l'unité de commande (19) étant munie d'un programme de commande pour signaler l'utilisation instantanée d'un disque et pour commander la libération d'un mécanisme d'entraînement correspondant (14) en vue de sortir celui-ci du boîtier tour (1).

2. Unité de changement de disques selon la revendication 1, **caractérisée en ce que** l'utilisation ou la non-utilisation momentanée d'un disque, respectivement la libération ou la non-libération d'un magasin de disques associé (13) est signalée au moyen d'un élément lumineux associé respectif (23).

3. Unité de changement de disques selon la revendication 1 ou 2, **caractérisée en ce qu'**à chaque magasin de disques (13) est associé un élément de pilotage (24) pour consulter la libération respective.

4. Unité de changement de disques selon l'une des revendications 1 à 3, **caractérisée en ce qu'**en actionnant l'élément de pilotage (24), le magasin de disques associé (13) est libéré en vue de sa sortie.

5. Unité de changement de disques selon l'une des revendications 1 à 3, **caractérisée en ce que** la libération du magasin de disques respectif (13) s'effectue par pression manuelle sur la face apparente avant de celui-ci.

6. Unité de changement de disques selon l'une des revendications 1 à 5, **caractérisée en ce que** le magasin de disques (13), le mécanisme d'entraînement (14) et/ou le tiroir de chargement/éjection de disque (12) sont disposés de manière modulaire dans la partie avant du boîtier tour (1) et peuvent être échangés et/ou remplacés et/ou ajoutés par la face frontale du boîtier tour (1).

7. Unité de changement de disques selon l'une des revendications 1 à 6, **caractérisée en ce que** d'autres magasins de disques (13) et/ou mécanismes d'entraînement (14) sont disposés de manière modulaire dans la partie arrière du boîtier tour (1) et peuvent être échangés et/ou remplacés et/ou ajoutés par la face arrière (2) du boîtier tour (1).

8. Unité de changement de disques selon l'une des revendications 1 à 7, **caractérisée en ce que** le dispositif de transport (17) est disposé entre les magasins de disques (13), les mécanismes d'entraînement (14), respectivement le tiroir de chargement/éjection de disque (12) logés dans la partie avant du boîtier tour (1) et ceux logés dans sa partie arrière.

9. Unité de changement de disques selon l'une des revendications 1 à 8, **caractérisée en ce que** la face arrière (2) du boîtier tour (1) comporte une porte rabattable (3).

10. Unité de changement de disques selon l'une des revendications 1 à 9, **caractérisée en ce que** les logements (10) disposés les uns au-dessus des autres dans les parties avant et arrière du boîtier tour (1) sont chacun entourés latéralement par un cadre de guidage solidaire du boîtier.

11. Unité de changement de disques selon l'une des revendications 1 à 10, **caractérisée en ce que** dans la zone inférieure du boîtier tour (1) sont disposées l'unité de commande (19) et une unité d'alimentation en courant (20).

12. Unité de changement de disques selon l'une des revendications 1 à 11, **caractérisée en ce que** dans la zone supérieure du boîtier tour (1) sont prévus des emplacements supplémentaires (21) pour des cartes enfichables (21) commandant d'autres séquences opératoires.

13. Unité de changement de disques selon l'une des revendications 1 à 12, **caractérisée en ce que** le dispositif de pilotage (6) est disposé sur la face frontale (5) du boîtier tour (1).

14. Unité de changement de disques selon l'une des revendications 1 à 13, **caractérisée en ce que** sa séquence opératoire est interrompue lors de l'ouverture d'une porte (3) sur la face arrière (2) du boîtier tour (1).

15. Unité de changement de disques selon l'une des revendications 1 à 14, **caractérisée en ce qu'**au moins les magasins de disques (13) comportent chacun un moyen d'identification électronique qui peut être lu par l'unité de commande (19).

16. Unité de changement de disques selon l'une des revendications 1 à 15, **caractérisée en ce qu'**au moins l'un des logements (10) dans la partie avant ou arrière du boîtier tour (1) est prévu pour recevoir un dispositif d'impression ou un dispositif du scanneur.
